# EUROPEAN PATENT SPECIFICATION

(11) **EP 2 289 826 B1**
(45) Date of publication and mention of the grant of the patent: **13.03.2013**
(21) Application number: 10174793.9
(22) Date of filing: 01.09.2010
(51) Int. Cl.: B65G 47/90, B65G 61/00

(54) **Manually controlled depalletizing machine**
Handbetätigter Entpalettierer
Dépalettiseur à contrôle manuel

(30) Priority: 01.09.2009 IT TV20090169
(43) Date of publication of application: 02.03.2011
(73) Proprietor: OMA S.r.l., 37069 Villafranca di Verona (IT)
(72) Inventor: Baldi, Giampietro, 37069 Villafranca Di Verona (IT)
(74) Representative: Jorio, Paolo

(56) References cited:
- EP-A1- 1 842 809
- EP-A1- 2 070 849
- EP-A2- 1 338 536

## Description

The present invention relates to a compact, manually controlled depalletizing machine.

More specifically, the present invention relates to a manually-controlled machine for manually disassembling pallets of glass bottles or similar products; use to which the following description refers purely by way of example without this implying any loss of generality.

As known, in the bottling field the usual procedure is to unpack "pallets of glass bottles" by means of depalletizing machines which are capable of completely automatically disassembling one "pallet of glass bottles" at time, outputting a sequence of loose bottles, ready to be sent to other machines.

The "pallets of glass bottles" indeed consist of a predetermined number of layers of glass bottles stacked one over the other and resting on a either generally rectangular- or square- shaped wooden pallet, so as to form, once packed, a single, easily transportable block; whereas each layer of bottles consists of a predetermined number of glass-bottle rows, arranged parallel and side-by-side on a supporting tray or cardboard sheet, resting on the layer of bottles immediately underneath.

Given the non-negligible weight of the glass bottles, the depalletizing machines intended for disassembling "pallets of glass bottles" generally comprise:
- a substantially rectangular trellis-like bearing structure, appropriately anchored to the ground;
- a storage platform of the pallet to be disassembled, which is generally located in the middle of the bearing structure, on ground level;
- a loose-bottles accumulation shelf which is fixed to the bearing structure, by the side and in raised position with respect to the pallet storage platform, and from which a conveyor belt usually departs; and
- a gripping head, which is movably mounted on the bearing frame in horizontal and vertical directions, over the pallet storage platform and the loose-bottles accumulation shelf, and is provided with a bottles gripping device which is structured so as to be able to take a predetermined number of rows of bottles at a time from the top of the pallet standing on the storage platform, and then deposit these rows of bottles on the accumulation shelf immediately adjacent to the aforesaid pallet storage platform.

More specifically, the bottle gripping device is able of gripping a whole layer of bottles, or a part thereof, from the top of the pallet standing on a storage platform, and generally consists of a number of inflatable bladders of elongated tubular shape, traditionally named "inflatable blades", which are fixed parallel to each other in horizontal position on the gripping head frame, copying the spatial distribution of the bottle rows forming each layer of the pallet.

The "inflatable blades" are usually connected to a pneumatic circuit which, on command, is able to inflate the "inflatable blades" so as to entrap the necks of the bottles located between the "blades".

Finally, the above-described depalletizing machines are also provided with a gripping-head moving system which, on command of an electronic control unit, is capable of displacing the gripping head on the bearing frame in horizontal and vertical directions, from the pallet storage platform to the bottle accumulation shelf, and vice versa, so as to disassemble the pallet of bottles in a completely automatic manner.

In view of the fact that automatic depalletizing machines have all but negligible dimensions, in recent years a rapid diffusion of manually-controlled depalletizing machines has occurred, which are *per se* more cost-effective to be manufactured and have much smaller dimensions.

With reference to patent application EP-2070849, which discloses a depalletizing machine according to the preamble of claim 1, the most commercially successful, compact, manually-controlled depalletizing machine consists in a bearing column, which is anchored to the ground in vertical position; a head-holder carriage, slidingly mounted on the bearing column in vertical direction; a carriage moving system which is able of moving the head-holder carriage along the bearing column on direct commands of the person superintending the machine operation; and finally a gripping head, which is fixed at one end of a bearing structure with an articulated parallelogram geometry, which protrudes from the head-holder carriage while remaining parallel to the ground underneath.

The pallet to be disassembled rests on the ground next to the bearing column; whereas the bearing structure with articulated parallelogram geometry is dimensioned so as to withstand the weight of the gripping head and that momentarily integral therewith, and so as to allow the gripping head to move horizontally on push of the person controling the machine.

More specifically, the articulated parallelogram geometry bearing structure is structured so as to allow the gripping head to move above the pallet to be disassembled along an arched trajectory which lays on a horizontal swinging plane; while the operator controlling the machine is allowed to manually vary the height of the swinging plane with respect to the ground, by appropriately driving the head-holder carriage moving system.

Despite working excellently, this model of compact depalletizing machine requires a given degree of mastery and care for driving the movement of the gripping head on the horizontal swinging plane.

In fact, the gripping head does not move on the swinging plane following a rectilinear trajectory, thus the user is requested to compensate, instant by instant, the radial component of the travelling direction of the gripping head on the swinging plane, manually moving the gripping head forward and backward with respect to the free end of the bearing structure with articulated parallelogram geometry.

Aim of the present invention is therefore to further improve the operation of the compact, manually-operated depalletizing machine described above.

In compliance with the above aims, according to the present invention there is provided a compact depalletizing machine as defined in Claim 1 and preferably, though not necessarily, in any one of the dependent Claims.

A non-limiting embodiment of the present invention will be described by way of example with reference to the accompanying drawings, in which:
- Figure 1 is a side view of a compact depalletizing machine realized in accordance with the teachings of the present invention;
- Figure 2 shows, on enlarged scale and with parts removed for clarity, a detail of the depalletizing machining shown in figure 1, with parts removed for clarity;
- Figure 3 is a plan view of the compact depalletizing machine shown in figures 1 and 2 in a possible operating position, with parts removed for clarity.

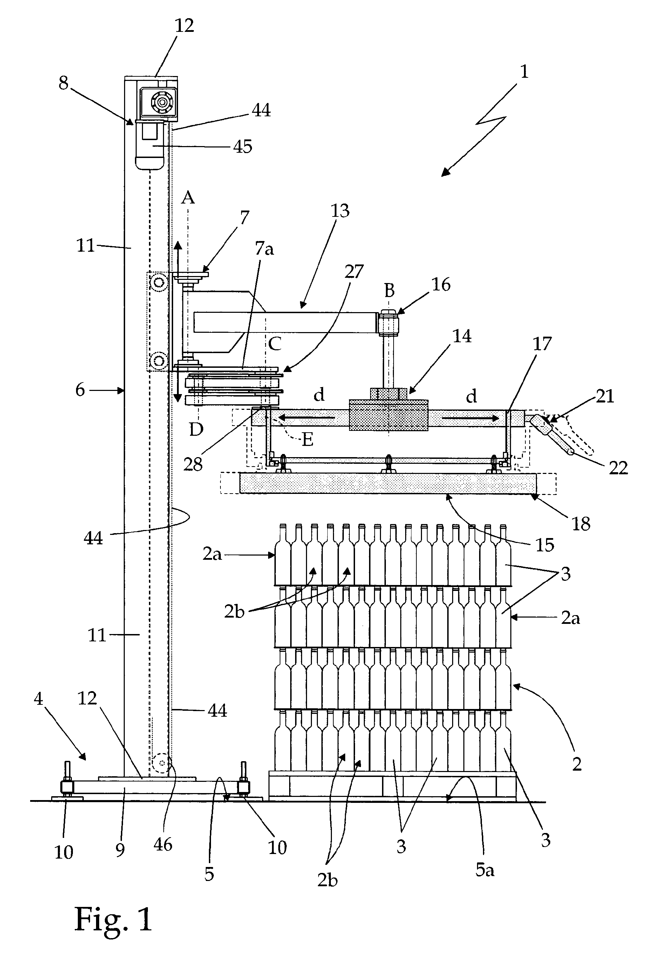

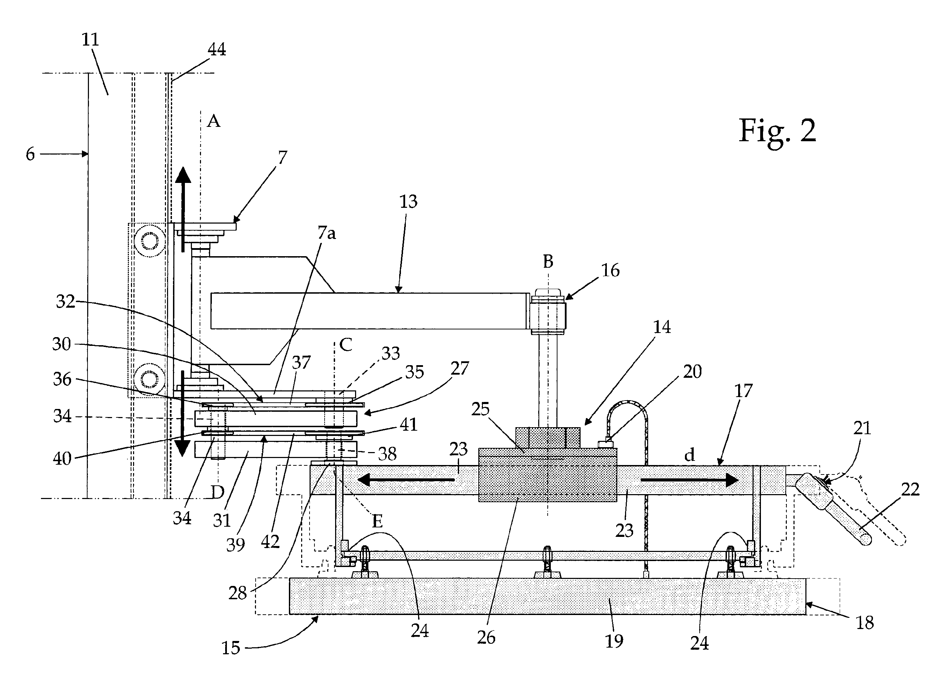

With reference to figures 1 and 2, number 1 indicates as a whole a compact depalletizing machine by means of which a person may manually disassemble, without excessive physical efforts, a pallet 2 of glass bottles or similar products, outputting a sequence of loose glass bottles 3, ready to be conveyed to other machines.

Obviously, the depalletizing machine 1 may also be used for disassembling pallets containing other types of products, such as glass vases or the like.

Similarly to any other type of "product pallet", in fact the glass-bottles pallets 2 consist of a tidy, compact ensemble of glass bottles 3, which is made of a number of bottles layers 2a stacked one over the other on a generic, preferably, though not necessarily, rectangular- or square- shaped transport platform, so as to form, once packed, a single block which is easy to be transported. Each bottles layer 2a, instead, consists of a given number of rows of bottles 2b, arranged so as to be parallel and side-by-side to one another, preferably, though not necessarily, in a quincunx arrangement.

In the example shown, in particular, the bottles pallet 2 consists of four overlapping bottles layers 2a, each of which is made of fifteen rows of bottles 2b arranged in a quincunx arrangement with respect to one another. Each row of bottles 2b instead consists of fifteen bottles 3.

The depalletizing machine 1 comprises a ground-resting base 4, which is adapted to be rigidly fixed to the ground 5 by means of a number of anchor bolts or other anchoring elements of known type, next to a stocking area 5a in whose perimeter the pallet 2 to be disassembled is to be placed; a bearing column 6, which protrudes from the base 4 in an substantially vertical direction, by the side of the stocking area 5a intended to accommodate the pallet 2 to be disassembled; a head-holder carriage 7 slidingly mounted on the bearing column 6 in a vertical direction; and manually-controlled carriage moving means 8 which are able to vertically move the head-holder carriage 7 along the supporting column 6, under the exclusive and direct control of the operator controlling the machine.

With reference to figures 1, 2 and 3, in the example shown, in particular, base 4 consists of a number of square-section metallic tubular elements 9, which are fixed to one another so as to form a substantially rectangular-shape, rigid flat frame, at whose vertexes are arranged corresponding adjustable ground-resting feet 10 which, in turn, are fixed to the ground 5 by means of foundation bolts or anchor bolts of known type.

In the example shown, the bearing column 6 is instead formed by two rectilinear, U-section metallic section bars 11, whose lower ends are rigidly fixed onto the metallic tubular elements 9 forming the base 4, and which protrude from base 4 in a substantially vertical direction remaining parallel and distanced one another; and by a number of horizontal stiffening longitudinal members 12, which are able to rigidly connect the upper and lower ends of the two metallic section bars 11 to one another.

With reference to figures 1, 2 and 3, the depalletizing machine 1 further comprises:
- a supporting arm 13, which protrudes from the head-holder carriage 2 in a substantially horizontal direction, above the stocking area 5a of the pallet 2 to be disassembled, and is hinged to the body of head-holder carriage 7 so as to be able to move freely with respect to the head-holder carriage 7 with a swinging movement about a first substantially vertical reference axis A;
- an intermediate bearing bracket 14, which is fixed in freely rotatable manner on the free end of the supporting arm 13, so as to be able to freely rotate with respect to supporting arm 13 about a second reference axis B parallel to axis A, i.e. substantially vertical; and
- a gripping head 15 which is structured so as to be able to withhold and release, on command, a predetermined number of rows of bottles 2b from the layer of bottles 2a placed on the top of the pallet 2 standing in the stocking area 5a, and which hangs below the bearing bracket 14 with the possibility of freely sliding with respect to the body of the bracket in a horizontal direction which is locally parallel to the longitudinal axis F of the head and locally perpendicular to axis B, i.e. parallel to the ground 5.

In other words, gripping head 15 is protrudingly fixed to the head-holder carriage 7 so as to fluctuate above the stocking area 5a, and is capable of moving and freely rotating above the pallet 2 standing in the stocking area 5a, remaining on a horizontal reference plane which locally substantially coincides with the swinging plane of the supporting arm 13.

Obviously, axes A and B are perpendicular to the swinging plane of the supporting arm 13.

Similarly to the compact depalletizing machines currently known, supporting arm 13 is dimensioned so as to support the total weight of bearing bracket 14 and of gripping head 15, with the possible load of bottles 3 taken from the top of the pallet 2 to be disassembled.

In the example shown, in particular, the supporting arm 13 consists of a rectilinear square section tubular beam which extends perpendicularly to the axes A and B, and ends with a rotational joint 16 which is arranged coaxial to axis B and is, in turn, connected to the bearing bracket 14.

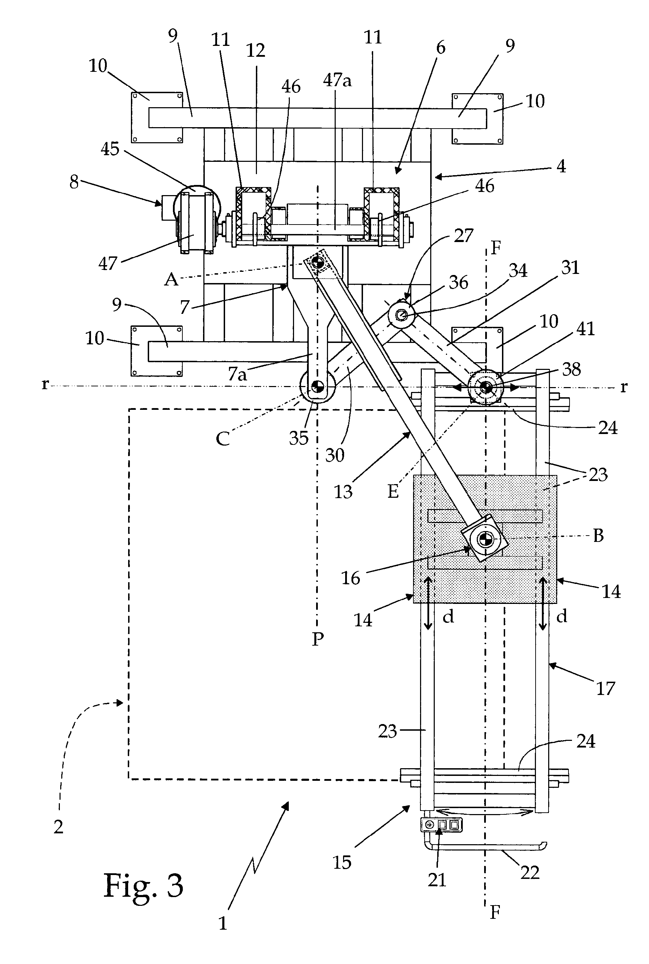

With reference to Figures 2 and 3, gripping head 15 instead comprises a rigid bearing frame 17 which is fixed below the bearing bracket 14, so as to be able to freely move with respect to the body of the bracket in the direction d locally parallel to the head longitudinal axis F; and a plurality of gripping devices 18, which are attached below the bearing frame 17 so as to face the ground 5.

The gripping devices 18 are selectively able to withhold the rows of bottles 2b which form the layer 2a located on the top of the pallet 2, and are arranged on the bearing frame 24 so as to copy the spatial distribution of the rows of bottles 2b which form a single layer of the pallet 2 being disassembled, or a part thereof. In fact, it is worth noting that the number and special distribution of the gripping devices 18 on bearing frame 17 varies according to the number of rows of bottles 2b intended to be contemporaneously picked up from the layer of bottles 2a arranged on the top of the pallet 2.

In the example shown, in particular, the gripping devices 18 consist of a number of elongated, inflatable bladders 19 which are fixed horizontally onto bearing frame 24 of gripping head 13, so as to be locally substantially parallel to the head longitudinal axis F, and to copy the spatial distribution of the rows of bottles 2b which form a layer 2a of the pallet 2; and of one or more controlled opening and closing solenoid valves 20, which are able to adjust the pressurized-air flow from the pneumatic circuit of the machine (not shown) to the bladders 26, so as to cause, on command, the controlled inflation and deflation of the bladders.

The bladders 19, commonly named "inflatable blades", are devices widely used in the packaging industry and therefore will not be described in further detail.

As regards instead the solenoid valves 20 which control the inflation and deflation of bladders 19, each of them is able to control the entrance and exit of the pressurized air to/from one or more bladders 19, and it is adapted to be directly driven by the user controlling the machine, via buttons or other type of manually-operated selectors arranged on a control panel 21 which, in the example shown, is protrudingly fixed on bearing frame 17 of gripping head 8, in the immediate proximity to a handle 22 that the user is allowed to grip for horizontally displacing the whole gripping head 15.

In other words, activation and deactivation of gripping devices 18 is manually controlled by the operator, only and exclusively via buttons or other manually-operated control devices located on the control panel 21.

In particular, in the example shown, bladders 26 are five in number so as to be able to withhold four rows of bottles 2b at a time, and are arranged on bearing structure 17 at a reciprocal distance substantially equal to the distance which separates two adjacent rows of bottles 2b, and the gripping head 15 is provided with a single solenoid valve 20 for controlling at the same time all the bladders 19 present on the gripping head.

With reference to figures 2 and 3, in the example shown, instead, bearing frame 17 is formed by a rigid rectangular frame 23 made of metal material, which lays on a horizontal plane locally perpendicular to axis B, with the beams or section bars defining the longer sides of the frame oriented parallel to the head longitudinal axis F; and by two gripping-devices supporting racks 24 each of which is arranged, in horizontal position, underneath a respective small side of the rectangular frame 23, and is rigidly fixed to the beam or section bar defining the aforesaid small side edge.

Finally, bearing frame 17 is further provided with a substantially L-bent, cylindrical tubular bar which protrudes from one of the two shorter sides of rectangular frame 23, so as to form the handle 22 to be gripped by the user for moving horizontally the gripping head 15.

As regards instead the bearing bracket 14, in the illustrated example it is formed by an upper supporting plate 25 which is locally parallel to the swinging plane of supporting arm 13, and is centrally anchored to the rotational joint 16 of supporting arm 13 so to be able to freely rotate about axis B; and by two longitudinal sliding blocks or runners 26 which are fixed below plate 25, and are structured so as to slidingly couple with the two bars forming the longer sides of rectangular frame 23, allowing the latter to freely slide parallel to the longitudinal axis thereof, i.e. in direction d.

With reference to figures 1, 2 and 3, unlike the currently known compact depalletizing machines, depalletizing machine 1 is finally provided with a pantograph-movement articulated arm 27 which is located below supporting arm 13, with a first end fixed onto the head-holder carriage 7 and a second end fixed onto the supporting frame 17 of gripping head 15, and which is structured so as to be able to open like a scissor on a horizontal plane locally parallel to the swinging plane of supporting arm 13, while maintaining the two ends of articulated arm 27 always aligned to a same space-motionless, horizontal reference straight line r, so as to force gripping head 15 to move, during rotation of supporting arm 13 about axis A, on the swinging plane along a rectilinear horizontal trajectory which is locally parallel to the horizontal reference straight line r.

In other words, the pantograph-movement articulated arm 27 does not withstand the weight of gripping head 15, but instead has the function of guiding the movement of gripping head 15 on the swinging plane of the supporting arm 13.

Furthermore, during the movement of gripping head 15 on swinging plane, the articulated arm 27 is able to maintain gripping head 15 always parallel to a reference plane P which coincides with, or is in any case parallel to, the vertical laying plane of the bearing column 6, on which head-holder carriage 7 moves. In other words, the articulated arm 27 is able to maintain the longitudinal axis F of the gripping head 15 always parallel to the reference plane P.

In the example shown, in particular, the reference plane P is preferably, though not necessarily, perpendicular to the horizontal reference straight line r, along which the two ends of the articulated arm 27 are located. Obviously, plane P is always perpendicular to the swinging plane of supporting arm 13.

With reference to figures 1, 2 and 3, in the example shown, in particular, the head-holder carriage 7 is provided with a protruding bearing beam 7a, which protrudes from the carriage in substantially horizontal direction, above the stocking area 5a of the pallet 2 to be disassembled, remaining below supporting arm 13; and the articulated arm with pantograph movement 27 has a first end pivotally jointed in axially rotating manner to bearing beam 7a, and the second end pivotally jointed in axially rotating manner onto the bearing frame 17 of gripping head 15 preferably, though not necessarily, by means of the interposition of a connection member 28 of elastically deformable type.

With reference to figures 2 and 3, in turn, the articulated arm with pantograph movement 27 essentially consists of an upper half arm, hereinafter indicated by numeral 30, which has an end pivotally jointed to the bearing beam 7a so to be able to rotate freely with respect to the latter about a rotation axis C parallel to axis A; of a lower half arm, hereinafter indicated by numeral 31, which is rotatably mounted on the free end of the half arm 30 so as to be able to freely rotate with respect to the latter about an axis D parallel to axis C; and of a first gears set 32 which is structured so as to transmit to the body of half-arm 31 the rotational motion with which the half-arm 30 rotates about the axis C, so that the body of the half-arm 31 is forced to rotate, about axis D and with respect to half-arm 30, at twice the angular speed with which the half-arm 30 rotates above the axis C and with a rotation direction opposite to the latter.

In other words, the gears set 32 is able to transmit to the body of half-arm 31 the rotation motion with which half-arm 30 rotates about axis C, so as to coordinate the scissor-like opening of half-arms 30 and 31 with the rotation of half-arm 30 about axis C.

More specifically, the half-arms 30 and 31 both extend parallel to the swinging plane of supporting arm 13, one over the other, and are arranged on reference plane P, parallel and faced one another, when the articulated arm 27 is completely closed (see figure 2).

With reference to figure 2, in particular, half-arm 30 is fixed in free revolving manner onto the bearing beam 7a by means of a through pin 33 that extends through the bearing beam 7a coaxially to axis C, and engages in free revolving manner the body of half-arm 30 by means of the interposition of ball bearings of known type (not shown). In other words, the proximal end of half-arm 30 is rotatably mounted on the through pin 33 which protrudes from the bearing beam 7a of head-holder carriage 7 and is rigidly connected to the bearing beam 7a.

Half-arm 31 has instead his proximal end hinged to the distal end of half-arm 30 by means of a through pin 34 which extends through the body of the half-arm 30 and of half-arm 31, remaining coaxial to the axis D. More specifically, through pin 34 is rigidly keyed onto the proximal end of the half-arm 31, and is inserted in axially rotating manner on body of half-arm 30 by means of the interposition of ball bearings of known type (not shown).

With reference to figure 2, the gears set 32 which synchronizes the movement of half-arm 31 about axis D with the movement of half-arm 30 about axis C, is formed by a main pulley or toothed wheel 35 which is fitted/keyed onto the through pin 33 of half-arm 31 so as to be motionless with respect to the through beam 7a; by a secondary pulley or toothed wheel 36 which is rigidly keyed onto the upper end of the through pin 34; and finally by a transmission chain 37 looped about the two toothed wheels 35 and 36. Furthermore, the nominal diameter of the toothed wheel 35 is twice that of the toothed wheel 36, so that the toothed wheel 36 and the through pin 34 integral therewith are forced to rotate about axis D at a angular speed twice that with which the half-arm 30 rotates about toothed wheel 35.

With reference to figures 2 and 3, the articulated arm with pantograph movement 27 is also provided with a rotatable fastening pin 38, which extends coaxially to an axis E parallel to axes C and D, is inserted in through and axially rotating manner into the distal end of half-arm 31, and has the lower end angularly fixed to the bearing frame 17 of gripping head 15.

In addition to the above, rotatable pin 38 is further arranged on half-arm 31 so that the distance between the axes D and E is equal to the distance between the axes C and D, so that the scissor-like opening of the half-arms 30 and 31 is simultaneous with the rotation of the half-arm 30 about the axis C, is translated into a movement of the rotatable fastening pin 38 on the swinging plane of supporting arm 13, along the horizontal reference straight line r, while the through pin 33 remains immovable on the horizontal reference straight line r.

In the example shown, in particular, the lower end of rotatable pin 38 is fixed to the bearing frame 17 of gripping head 15 preferably, though not necessarily, by means of the interposition of a flexible joint 28, which is structured so as to allow the rotatable joint 38 to move slightly and temporarily from its reference position on the bearing frame 17, so to allow the gripping head 15 to make small movements and/or settling rotations about axis B. More specifically, in the illustrated example, the flexible joint 28 comprises a bushing made of elastomeric material, i.e. of deformable elastomeric material, which is interposed between the lower end of rotatable pin 38 and the bearing frame 17.

With reference to figures 2 and 3, the articulated arm with pantograph movement 27 is finally provided with a second gears set 39, which is structured so as to transmit to the rotatable pin 38 the rotational movement with which half-arm 31 rotates with respect to the half-arm 30 about axis D.

More specifically, the gears set 39 is structured so as to transmit to rotatable pin 38 the rotational movement of half-arm 31 about axis D with respect to the half-arm 30, with a predetermined transmission ratio which forces rotatable pin 38 to rotate about axis E, within the half-arm 31, in a direction opposite to that with which the through pin 34 rotates about the axis D within half-arm 30, and at an angular speed equal to half the rotation speed of the latter.

In this manner, during the spreading of half-arms 30 and 31, i.e. during the extension of the articulated arm 27, the gears set 39 is able to rotate the rotatable pin 38 about axis E, within half-arm 31, in phase opposition with respect to half-arm 31 itself, so as to compensate for the rotation of the latter about axis D.

More specifically, the gears set 39 is able to rotate the rotatable fastening pin 38 with respect to the half-arm 31, in turn movable by a rotary-translation motion, so that, for an observer motionless in space, the rotatable pin 38 moves along the horizontal reference straight line r without any rotation about the axis E.

In view of the fact that the lower end of rotatable pin 38 is integral with gripping head 15, the translation constraints associated to rotatable pin 38 (rotatable pin 38 is allowed to only translate along the horizontal reference straight line r, without being able to rotate about axis E) force the gripping head 15 to move along a rectilinear horizontal trajectory, which is parallel to the horizontal reference straight line r, maintaining its longitudinal axis F always parallel to itself.

In other words, gears set 39 is able rotate the rotatable pin 38 within half-arm 9 so as to maintain, during the extension of the articulated arm 27, the gripping head 15 always perfectly parallel to itself.

More specifically, in the example shown, the rotatable pin 38 is fixed to the bearing frame 17 of gripping head 15 so as to maintain the head longitudinal axis F always substantially perpendicular to the horizontal reference straight line r, i.e. always parallel to the reference plane P.

With reference to figures 2 and 3, in the illustrated example, in particular, the gears set 39 consists of a main pulley or toothed wheel 40 which is rotatably fitted on the through pin 34, between half-arm 30 and half-arm 31; of a secondary pulley or toothed wheel 41 which is rigidly keyed onto the upper end of rotatable pin 38, on the opposite side of gripping head 15; and finally of a transmission chain 42 which is looped about the two toothed wheels 40 and 41 mentioned above. In this case, the toothed wheel 40 is rigidly fixed to the body of half-arm 30 and has a nominal diameter equal to half that of toothed wheel 41, so that the chain 42 drives into rotation the toothed wheel 41 about the axis E at an angular speed equal to half the angular speed by which the toothed wheel 40 rotates which respect to half-arm 31.

With reference to figures 1 and 3, in the illustrated example, the carriage moving means 8 instead comprise two drive chains 44, which are arranged in vertical position, each inside a corresponding metallic section bar 11 of supporting column 6, and are both rigidly connected to head-holder carriage 7 along one of the vertical segments thereof; and an electric motor 45 which is adapted to move the two chains 44 inside the two metallic section bars 11, so as to displace the head-holder carriage 7 along the bearing column 6.

More specifically, each of the two drive chains 44 is looped about a pair of toothed wheels 46, which are rotatably fixed in axially rotatable manner within the corresponding metallic section bar 11, in proximity of the two ends of the latter, while the electric motor 45 is protrudingly fixed to the upper end of the bearing column 6, and is mechanically coupled to the toothed wheels 46 positioned at the upper ends of the two metallic section bars 11, by means of a ratiomotor 47 having its output shaft 47a which extends horizontally through the upper ends of both the metallic section bars 11 of bearing column 6.

In other words, the output shaft 47a of the ratiomotor 47 is axially-rotatable mounted inside the upper ends of the two metallic profiles 11, and the upper toothed wheels 26 of both the drive chains 44 are keyed onto the shaft 47a so as to allow the electric motor 45 to move both the drive chains 44 at the same time, so as to either raise or lower the head-holder carriage 7 on the bearing column 6.

Similarly to the currently known compact depalletizing machines, the operation of the electric motor 45 is under the direct, exclusive control of the operator driving the machine. In particular, in the example shown, operation of electric motor 45 is manually controlled by the operator via a joystick or other manually-operated control device arranged on the control panel 21.

The operation of depalletizing machine 1 is easily inferable from the description above, and thus does not require further explanations. Unless to specify that the operator only needs to horizontally move the gripping head 15 above the pallet 2 standing in the stocking area 5a, leaving to the articulated arm with pantograph movement 27 the task of controlling the position of the gripping head 15 with respect to the bearing bracket 14.

The upward and downward movement of the gripping head 15 is instead carried out with the aid of the electric motor 45, obviously again under the direct, exclusive control of the operator driving the machine.

The presence of the flexible joint 28, instead, allows the operator to temporarily displace/move away the gripping head 15 from the ideal position determined by the articulated arm with pantograph movement 27 in order to manually align the gripping devices 18 with the rows of bottles 2b which form the layer 2a arranged on the top of the pallet 2, thus facilitating the subsequent gripping of the bottles 3.

The advantages of the depalletizing machine 1 are large in number. Firstly, thanks to the pantograph-movement articulated arm 27, the gripping head 15 is no more allowed to dangerously move towards the operator during the swinging of supporting arm 13, thus drastically reducing the risk of collision of the gripping head 15 with the operator's head or chest.

Furthermore, thanks to the pantograph-movement articulated arm 27, the depalletizing machine 1 avoids to the operator the need to control instant-by-instant the trajectory of the gripping head 15 on the swinging plane of the supporting arm, making the disassembly of the pallet simpler and quicker to carry out.

Finally, since the gripping head 15 now moves along a perfectly rectilinear horizontal trajectory, the depalletizing machine 1 may be installed in very narrow places, with all the advantages that this implies.

Clearly, changes may be made to the depalletizing machine 1 as described and illustrated herein without, however, departing from the scope of the present invention, defined by the appended claims.

For example, instead of being a straight beam, the supporting arm 13 may consist of a banana-arched, tubular beam having a square section, or of a substantially V-folded beam with obtuse angle.

## Claims

1. A depalletizing machine (1) for disassembling pallets (2) comprising
- a bearing column (6) extending in a substantially vertical direction;
- a head-holder carriage (7) slidingly mounted on the bearing column (6) in a substantially vertical direction;
- a supporting arm (13) which protrudes from the head-holder carriage (7) in a substantially horizontal direction, and is hinged to the body of the head-holder carriage (7) so as to move with respect to the head-holder carriage (7) with a swinging movement about a first substantially vertical reference axis (A);
- an intermediate bearing bracket (14) which is fixed to the supporting arm (13) so as to freely rotate with respect to the latter about a second reference axis (B) locally parallel to said first reference axis (A); and
- a gripping head (15) which is structured so as to hold and release, on command, a given number of products (3) from the top of the pallet (2) to be disassembled, and hangs below the bearing bracket (14) with the possibility of freely sliding with respect to the latter in a direction (d) locally parallel to the head longitudinal axis (F) and locally perpendicular to the second reference axis (B);
the depalletizing machine (1) being **characterized by** also comprising an articulated arm with pantograph movement (27), which is positioned below the supporting arm (13) and which comprises: atop half-arm (30) having an end hinged on the head-holder carriage (7) so as to freely rotate with respect to the latter about a third reference axis (C) parallel to said first reference axis (A); a bottom half-arm (31) which is rotatably mounted on the free end of the top half-arm (30) so as to freely rotate with respect to the latter about a fourth reference axis (D) parallel to said third reference axis (C); and a first gear set (32) which is configured to transmit to the bottom half-arm (31) the rotational movement by which the top half-arm (30) rotates about the third reference axis (C), so that the bottom half-arm (31) is forced to rotate about the fourth reference axis (D) and with respect to the top half-arm (30), with an angular speed which is twice the angular speed by which the top half-arm (30) rotates about the third reference axis (C) and with a rotation direction opposite to the latter, for opening in a scissor-like manner the top (30) and bottom half-arms (31) on a horizontal plane locally parallel to the swinging plane of the supporting arm (13) while maintaining the two ends of the articulated arm (27) always on a same horizontal reference straight line (r) that does not move in space;
said articulated arm (27) furthermore comprising a rotatable fastening pin (38) which extends coaxially to a fifth reference axis (E) parallel to the third (C) and fourth reference axis (D) and is through-inserted in an axially rotatable manner into the distal end of the bottom half-arm (31), and a second gears set (39) which is configured so to transmit to the rotatable pin (38) the rotational movement of the bottom half-arm (31) about the fourth reference axis (D) with respect to the top half-arm (30) with a given gear ratio that forces the rotatable pin (38) to rotate about the fifth reference axis (E), within the bottom half-arm (31), in a direction opposite to that by which the bottom half-arm (31) rotates with respect to the top half-arm (30) about the fourth reference axis (D) and with an angular speed which is half the rotation speed of the bottom half-arm (31);
the gripping head (15) in turn comprising a rigid bearing frame (17) which is fixed below the bearing bracket (14) so as to freely move with respect to the latter in a horizontal direction (d) parallel to the longitudinal axis (F) of the bracket, anda plurality of products gripping devices (18) which are fastened below the bearing frame (17) so as to face the ground (5); the lower end of the rotatable pin (38) being fixed in angularly integral manner to the rigid bearing frame (17) of said gripping head (15).

2. A depalletizing machine (1) according to Claim 1, **characterized in that** the lower end of the rotatable pin (38) is fixed to the bearing frame (17) of the gripping head (15) with the interposition of an elastically deformable connection member (28).

3. A depalletizing machine according to any one of the preceding claims, **characterized in that** the supporting arm (13) is dimensioned so to support the overall weight of the bearing bracket (14) and of the gripping head (15), with the possible load of products (3) taken from the top of the pallet (2) to be disassembled.

4. A depalletizing machine according to any one of the preceding claims, **characterized by** also comprising manually-controlled carriage moving means (8) which are able to move the head-holder carriage (7) along the bearing column (6) under the direct and exclusive control of the operator operating the machine.

5. A depalletizing machine according to any one of the preceding claims, **characterized in that** the bearing column (6) protrudes from a ground-resting base (4) which is adapted to be rested and rigidly anchored to the ground (5), close to a stocking area (5a) in the perimeter of which the pallet (2) to be disassembled is to be rested.

6. A depalletizing machine according to any one of the preceding claims, **characterized in that** said rigid bearing frame (17) comprises a rigid rectangular frame (23) lying on a horizontal plane locally perpendicular to the second reference axis (B), with the bars that define the longer sides of the frame oriented parallelly to the head longitudinal axis (F); and **in that** the bearing bracket (14) comprises a top support plate (25), which is centrally fastened in an axially rotatable manner to the supporting arm (13), and two support runners or longitudinal guides (26) which are fixed below the plate (25), and are structured so as to slidingly couple to the two bars forming the longer sides of the rectangular frame (23), thus allowing the latter to freely slide parallelly to the longitudinal axis thereof.

7. A depalletizing machine according to any one of the preceding claims, **characterized in that** the gripping head (15) is structured so as to hold an release, on command, one or more rows of bottles (2b) from the top of the pallet (2) to be disassembled.

8. A depalletizing machine according to any one of Claims 4 to 7, **characterized by** comprising a control panel (21); the operation of said carriage moving means (8) being manually controlled by the operator via a first manually-operated control device located on said control panel (21).

9. A depalletizing machine according to claim 8, **characterized in that** the activation and deactivation of the products gripping devices (18) are controlled by at least one second manually-operated control device located on said control panel (21).

## Patentansprüche

1. Entpalletierungsmaschine (1) zum Entpacken von Paletten (2) umfassend:
- eine tragende Säule (6), die sich im Wesentlichen in vertikaler Richtung erstreckt;
- ein Kopfhalterungswagen (7), der in einer im Wesentlichen vertikalen Richtung verschiebbar an der tragenden Säule (6) montiert ist;
- einen Tragarm (13), der sich vom Kopfhalterungswagen (7) in einer im Wesentlichen horizontalen Richtung erstreckt und an dem Körper des Kopflialterungswagens (7) angelenkt ist, um bezüglich des Kopfhalterungswagens (7) mit einer Schwingbewegung um eine erste im Wesentlichen vertikale Referenzachse (A) bewegt zu werden;
- eine Zwischenlagerklammer (14), die am Tragarm (13) befestigt ist, um frei in Bezug auf den letzteren um eine lokal parallel zur ersten Referenzachse (A) verlaufende zweite Referenzachse (B) zu rotieren; und
- einen Greifkopf (15), der auf einen Befehl hin zum Halten und Freigeben einer vorgegebenen Anzahl von Produkten (3) von einer Oberseite von der zu entpackenden Palette (2) aufgebaut ist, und der unter der Lagerklammer (14) hängt mit der Möglichkeit eines freien Gleitens mit Bezug auf die Letztere, in eine Richtung (d) lokal parallel zur Kopflängsachse (F) und lokal rechtwinklig zur zweiten Referenzachse (B);
die Entpalettierungsmaschine (1) ist **dadurch gekennzeichnet, dass** sie auch umfasst: einen Gelenkarm mit einer Pantographbewegung (27), der unter dem Tragarm (13) positioniert ist und der umfasst: einen oberen Halbarm (30) mit einem Ende, das an dem Kopfhalterungswagen (7) angelenkt ist, um frei mit Bezug auf den Letzteren um eine parallel zur ersten Referenzachse (A) verlaufende dritte Referenzachse (C) zu rotieren; einen unteren Halbarm (31), der drehbar am freien Ende des oberen Halbarms (30) befestigt ist, um frei mit Bezug auf den Letzteren um eine parallel zur dritten Referenzachse (C) verlaufende vierte Referenzachse (D) zu rotieren; und ein erstes Getriebe (32), das eingerichtet ist, die Drehbewegung mit der der obere Halbarm (30) um die dritte Referenzachse (C) rotiert auf den unteren Halbarm (31) zu übertragen, so dass der untere Halbarm (31) gezwungen wird, sich um die vierte Referenzachse (D) und mit Bezug auf den oberen Halbarm (30) zu drehen, mit einer Winkelgeschwindigkeit, die zweimal der Winkelgeschwindigkeit entspricht, mit der sich der obere Halbarm (30) um die dritte Referenzachse (C) dreht und mit einer Drehrichtung entgegengesetzt zu Letzterem, zum scherenartigen Öffnen des oberen (30) und unteren Halbarms (31) auf einer horizontalen Ebene lokal parallel zur Schwingebene des Tragarms (13), während die zwei Enden des Gelenkarms (27) immer in der gleichen horizontalen geraden Referenzlinie (r) verbleiben, der sich nicht räumlich bewegt;
der Gelenkarm (27) umfasst weiter einen drehbaren Befestigungsbolzen (38), der sich koaxial zu einer fünften Referenzachse (E) erstreckt, die parallel zur dritten (C) und zur vierten Referenzachse (D) verläuft und der in axial drehbarer Art und Weise durch das Distalende des unteren Halbarms (31) durchgeführt ist, und ein zweites Getriebe (39), das eingerichtet ist, die Drehbewegung des unteren Halbarms (31) um die vierte Referenzachse (D) bezüglich des oberen Halbarms (30) mit einem gegebenen Übersetzungsverhältnis auf den drehbaren Bolzen (38) zu übertragen, die den drehbaren Bolzen (38) zwingt, sich um die fünfte Referenzachse (E), innerhalb des unteren Halbarms (31), entgegengesetzt zur Richtung zu drehen, durch die der untere Halbarm (31) bezüglich des oberen Halbarms (30) um die vierte Referenzachse (D) rotiert und mit einer Winkelgeschwindigkeit, die der Hälfte der Rotationsgeschwindigkeit des unteren Halbarms (31) entspricht;
der Greifkopf (15) wiederum enthält einen starren Lagerrahmen (17), der unter der Lagerklammer (14) befestigt ist, um sich frei mit Bezug auf die Letztere in einer horizontalen Richtung (d) parallel zur longitudinalen Achse (F) der Klammer zu bewegen, und eine Vielzahl von Produktgreifgeräten (18), die unterhalb des Lagerrahmens (17) befestigt sind, und zum Boden (5) ausgerichtet sind; das untere Ende des drehbaren Bolzens (38) ist in einer abgewinkelten einstückigen Art und Weise an dem starren Lagerrahmen (17) des Greifkopfes (15) befestigt.

2. Eine Entpalettierungsmaschine (1) nach Anspruch 1, **dadurch gekennzeichnet, dass** das unter Ende des drehbaren Bolzens (38) an dem Lagerrahmen (17) des Greifkopfes (15) befestigt ist, mit Einfügung eines elastisch deformierbaren Verbindungselements (28).

3. Eine Entpalettierungsmaschine (1) nach einem der vorstehenden Ansprüche, **dadurch gekennzeichnet, dass** der Tragarm (13) dimensioniert ist, um das Gesamtgewicht der Lagerklammer (14) und des Greifkopfes (15) mit einer möglichen Last von Produkten (3), die von oben von der zu entpackenden Palette genommen werden, abzustützen.

4. Eine Entpalettierungsmaschine nach einem der vorherigen Ansprüche, **gekennzeichnet dadurch, dass** diese auch enthält: einen manuell steuerbares Wagenbewegungsmittel (8), das in der Lage ist, den Kopfhalterungswagen (7) entlang der Tragsäule (6) unter direkter und exklusiver Steuerung des Bedieners, der die Maschine steuert, zu steuern.

5. Eine Entpalettierungsmaschine nach einem der vorstehenden Ansprüche, **dadurch gekennzeichnet, dass** die Tragsäule (6) von einer auf dem Boden platzierten Basis (4) hervorsteht, die eingerichtet ist, um am Boden (5) aufzuliegen und dort fest verankert zu sein, nahe zu einem Lagerbereich (5a) in einem Umfang, in dem die zu entpackende Palette abgestellt wird.

6. Entpalettierungsmaschine nach einem der vorstehenden Ansprüche, **dadurch gekennzeichnet, dass** der starre Lagerahmen (17) einen starren rechtwinkligen Rahmen (23) umfasst, der auf einer horizontalen Ebene, die lokal senkrecht zur zweiten Referenzachse (B) verläuft, liegt, mit den Stangen, die die längeren Seiten des Rahmens bilden, der parallel zu der Kopflängsachse (F) ausgerichtet ist; und dass die Lagerklammer (14) eine obere Tragplatte (25) aufweist, die mittig in axial drehbar Art und Weise am Tragarm (13) befestig ist, und zwei Abstützschienen oder Längsführungen (26), die unter der Platte (25) befestigt sind und so strukturiert sind, dass sie die zwei Stangen, die die längeren Seiten des rechtwinkligen Rahmens (23) bilden, gleitend koppeln, um dem Letzteren zu ermöglichen frei parallel zu der Längsachse davon zu gleiten.

7. Eine Entpalettierungsmaschine nach einem der vorstehenden Ansprüche **dadurch gekennzeichnet, dass** der Greifkopf (15) strukturiert ist, um auf einen Befehl hin eine oder mehrere Reihen von Flaschen (2b) von einer Oberseite der zu entpackenden Palette (2) zu halten und freizugeben.

8. Eine Entpalettierungsmaschine nach einem der Ansprüche 4 bis 7, **gekennzeichnet durch** ein Steuerpanel (21), wobei der Betrieb des Wagenbewegungsmittels (8) manuell von dem Bediener über ein erstes manuell bedienbares Steuergerät, das auf dem Steuerpanel (21) angeordnet ist, gesteuert wird.

9. Eine Entpalettierungsmaschine nach Anspruch 8, **dadurch gekennzeichnet, dass** die Aktivierung und Deaktivierung der Produktgreifgeräte (18) von wenigstens einem zweiten manuell bedienbaren Steuerungsgerät, das auf dem Steuerpanel (21) angeordnet ist, gesteuert wird.

## Revendications

1. Machine de dépalletisation (1) destinée à dégrouper des palettes (2), comprenant :
- une colonne porteuse (6) s'étendant dans une direction sensiblement verticale ;
- un chariot support de tête (7) monté de manière coulissante sur la colonne porteuse (6) dans une direction sensiblement verticale ;
- un bras de support (13) qui fait saillie à partir du chariot support de tête (7) dans une direction sensiblement horizontale, et qui est articulé par rapport au corps du chariot support de tête (7) de façon à se déplacer par rapport au chariot support de tête (7) avec un mouvement d'oscillation autour d'un premier axe de référence sensiblement vertical (A) ;
- un support de palier intermédiaire (14) qui est fixé au bras de support (13) de façon à tourner librement par rapport à ce dernier autour d'un deuxième axe de référence (B) localement parallèle audit premier axe de référence (A) ; et
- une tête de préhension (15) qui est structurée de façon à tenir et relâcher, sur commande, un nombre donné de produits (3) à partir du dessus de la palette (2) à dégrouper, et qui s'accroche sous le support de palier (14) avec la possibilité de coulisser librement par rapport à ce dernier dans une direction (d) localement parallèle à l'axe longitudinal de la tête (F) et localement perpendiculaire au deuxième axe de référence (B) ;
la machine de dépalletisation (1) étant **caractérisée en ce qu'**elle comprend également un bras articulé animé d'un mouvement de pantographe (27), qui est positionné sous le bras de support (13) et qui comprend : un demi-bras supérieur (30) présentant une extrémité articulée sur le chariot support de tête (7) de façon à tourner librement par rapport à ce dernier autour d'un troisième axe de référence (C) parallèle audit premier axe de référence (A) ; un demi-bras inférieur (31) qui est monté de manière rotative sur l'extrémité libre du demi-bras supérieur (30) de façon à tourner librement par rapport à ce dernier autour d'un quatrième axe de référence (D) parallèle audit troisième axe de référence (C) ; et un premier ensemble d'engrenages (32) qui est configuré pour transmettre au demi-bras inférieur (31) le mouvement de rotation grâce auquel le demi-bras supérieur (30) tourne autour du troisième axe de référence (C), de telle sorte que le demi-bras inférieur (31) soit forcé de tourner autour du quatrième axe de référence (D) et par rapport au demi-bras supérieur (30), avec une vitesse angulaire qui est égale à deux fois la vitesse angulaire à laquelle le demi-bras supérieur (30) tourne autour du troisième axe de référence (C) et avec une direction de rotation opposée à celle de ce dernier, pour ouvrir d'une façon similaire à celle d'une paire de ciseaux le dessus (30) et le demi-bras inférieur (31) sur un plan horizontal localement parallèle au plan d'oscillation du bras de support (13) tout en maintenant les deux extrémités du bras articulé (27) toujours sur une même ligne droite de référence horizontale (r) qui ne se déplace pas dans l'espace ;
ledit bras articulé (27) comprenant en outre une broche de fixation rotative (38) qui s'étend de manière coaxiale vers un cinquième axe de référence (E) parallèle aux troisième (C) et quatrième (D) axes de référence et qui est insérée de manière traversante et axialement rotative dans l'extrémité distale du demi-bras inférieur (31), et un second ensemble d'engrenages (39) qui est configuré de façon à transmettre à la broche rotative (38) le mouvement de rotation du demi-bras inférieur (31) autour du quatrième axe de référence (D) par rapport au demi-bras supérieur (30) avec un rapport d'engrenages donné qui force la broche rotative (38) à tourner autour du cinquième axe de référence (E), à l'intérieur du demi-bras inférieur (31), dans une direction opposée à celle dans laquelle le demi-bras inférieur (31) tourne par rapport au demi-bras supérieur (30) autour du quatrième axe de référence (D) et avec une vitesse angulaire qui est égale à la moitié de la vitesse de rotation du demi-bras inférieur (31) ;
la tête de préhension (15) comprenant en retour un bâti de palier rigide (17) qui est fixé sous le support de palier (14) de façon à se déplacer librement par rapport à ce dernier dans une direction horizontale (d) parallèle à l'axe longitudinal (F) du support, et une pluralité de dispositifs de préhension de produits (18) qui sont attachés sous le bâti de palier (17) de façon à faire face au sol (5) ; l'extrémité inférieure de la broche rotative (38) étant fixée de façon angulairement intégrale au bâti de palier rigide (17) de ladite tête de préhension (15).

2. Machine de dépalletisation (1) selon la revendication 1, **caractérisée en ce que** l'extrémité inférieure de la broche rotative (38) est fixée sur le bâti de palier (17) de la tête de préhension (15) avec l'interposition d'un élément de liaison élastiquement déformable (28).

3. Machine de dépalletisation selon l'une quelconque des revendications précédentes, **caractérisée en ce que** le bras de support (13) est dimensionné de façon à supporter le poids global du support de palier (14) et de la tête de préhension (15), la charge de produits (3) possible étant prise à partir du dessus de la palette (2) à dégrouper.

4. Machine de dépalletisation selon l'une quelconque des revendications précédentes, **caractérisée en ce qu'**elle comprend également des moyens de déplacement du chariot commandés de manière manuelle (8) qui peuvent déplacer le chariot support de tête (7) le long de la colonne porteuse (6) sous la commande directe et exclusive de l'opérateur actionnant la machine.

5. Machine de dépalletisation selon l'une quelconque des revendications précédentes, **caractérisée en ce que** la colonne porteuse (6) fait saillie à partir d'une base reposant sur le sol (4) qui est adaptée pour être reposée et ancrée de manière rigide sur le sol (5), à proximité d'une zone de stockage (5a) dans le périmètre de laquelle la palette (2) à dégrouper doit être reposée.

6. Machine de dépalletisation selon l'une quelconque des revendications précédentes, **caractérisée en ce que** ledit bâti de palier rigide (17) comprend un bâti rectangulaire rigide (23) se situant dans un plan horizontal localement perpendiculaire au deuxième axe de référence (B), les barres qui définissent les côtés les plus longs du bâti étant orientées parallèlement à l'axe longitudinal de la tête (F) ; et **en ce que** le support de palier (14) comprend une plaque de support supérieure (25), qui est attachée de manière centrale et axialement rotative au bras de support (13), et deux rails de support ou guides longitudinaux (26) qui sont fixés sous la plaque (25), et qui sont structurés de façon à s'accoupler de manière coulissante aux deux barres formant les côtés les plus longs du bâti rectangulaire (23), permettant de ce fait à ce dernier de coulisser librement et parallèlement à son axe longitudinal.

7. Machine de dépalletisation selon l'une quelconque des revendications précédentes, **caractérisée en ce que** la tête de préhension (15) est structurée de façon à tenir et à relâcher, sur commande, une ou plusieurs rangées de bouteilles (2b) à partir du dessus de la palette (2) à dégrouper.

8. Machine de dépalletisation selon l'une quelconque des revendications 4 à 7, **caractérisée en ce qu'**elle comprend un panneau de commande (21) ; le fonctionnement desdits moyens de déplacement de chariot (8) étant commandés de manière manuelle par l'opérateur via un premier dispositif de commande actionné de manière manuelle, situé sur ledit panneau de commande (21).

9. Machine de dépalletisation selon la revendication 8, **caractérisée en ce que** l'activation et la désactivation des dispositifs de préhension de produits (18) sont commandées par au moins un deuxième dispositif de commande actionné de manière manuelle, situé sur ledit panneau de commande (21).
